# EUROPEAN PATENT APPLICATION

(11) **EP 4 462 230 A1**
(43) Date of publication of application: **13.11.2024**
(21) Application number: 24159777.2
(22) Date of filing: 26.02.2024
(51) Int. Cl.: G06F 1/3287, G06N 3/063, G06N 3/08, G06N 20/00, G06N 3/045

(54) **ARTIFICIAL INTELLIGENCE INFERENCING MACHINE AND METHOD OF USE THEREOF**

(30) Priority: 12.05.2023 US 202318196433
(71) Applicant: Deer IT Company, 34222 Damman (SA)
(72) Inventor: Alexander, Anton, 34222 Dammam (SA)
(74) Representative: Betten & Resch

(57) **Abstract**

A machine learning system comprising a power source, a central processor, and a first computing device. The central processor is configured to receive artificial-intelligence-specific models and creates at least one artificial-intelligence-specific task based on the artificial-intelligence-specific model. The first computing device is connected to the power source to receive power and the central processor to receive artificial-intelligence-specific tasks. The first computing device including a first base, a plurality of first processing units, and a first switch. The first base including a plurality of first traces. The first processing units are coupled with the first traces and configured to perform artificial-intelligence-specific tasks. The first switch is coupled with the first traces and connected to the first processing units via the first traces, wherein the first switch receives and distributes the artificial-intelligence-specific tasks amongst the first processing unit.

## Description

### CROSS-REFERENCE TO RELATED APPLICATIONS

This application claims priority to Pending US Patent Application Serial Number 18/196,433, filed on May 12, 2023, which is hereby incorporated by reference in its entirety.

### TECHNICAL FIELD

This invention relates to machine learning systems and methods. More specifically, the present invention relates to machine learning systems and methods that distribute different artificial-intelligence-specific tasks to different processing units for artificial intelligence model processing.

### BACKGROUND

Artificial intelligence (AI) can enable computers to perform increasingly complicated tasks, such as tasks related to cognitive functions typically associated with humans. Several approaches to AI are prevalent, including machine learning (ML) techniques. In ML, a computer may be programmed to parse data, learn from the data, and make predictions from real-world inputs. With ML, a computer may be trained using data to perform a task, rather than explicitly programmed with a particular algorithm for performing the task. One ML approach, referred to as artificial neural networks, was inspired by the interconnections of neurons in a biological brain.

Unfortunately, the complexity of many AI and ML techniques often requires the performance of a variety of computationally intensive tasks, which may tax existing computing systems to their limits. While the performance of processing units may be improved by scaling their frequency or voltage, processing units often become increasingly unstable past certain operating frequencies, voltages, and temperatures. Moreover, because general-purpose processing units are typically designed to handle a variety of unpredictable, software-based workloads, their power and performance needs are often similarly unpredictable and varied. These and other factors may make it difficult for designers to optimize the power usage and/or performance of AI and ML systems.

The other option to improve the overall performance of computationally intensive tasks involves the use of more processing units. However, form factor or heat dissipation of the system will become an issue as the use of more processing units requires more space and generates more waste heat.

Accordingly, there is a need for a compact machine learning system with optimized form factor to increase the number of processing units that can be fitted in a given space. There is also a need for a machine learning system that can intelligently create one or more tasks based on an artificial-intelligence-specific model, parse the task into a plurality of sub-tasks, and distribute the sub-tasks to the processing units for processing.

### SUMMARY

The present invention relates to a machine learning system comprising a power source, a central processor, and a first computing device. The central processor receives a plurality of artificial-intelligence-specific models and then creates at least one artificial-intelligence-specific task based on the model. The first computing device receives the artificial-intelligence-specific tasks from the central processor. The first computing device includes a first base having a plurality of first traces, a plurality of first processing units, and a first switch. The first processing units are coupled with the first traces on the first base and configured to perform artificial-intelligence-specific tasks. The first switch is coupled with the first traces and connected to the first processing units via the first traces. The first switch receiving and distributing the artificial-intelligence-specific tasks amongst the first processing unit.

The system further includes a memory having at least one of raw data and artificial-intelligence-specific model. The central processor creates the artificial-intelligence-specific task based on one of raw data and the artificial-intelligence-specific model. The central processor then designates the task to one of the processing units and sending the task to the designated processing units through the switch for artificial-intelligence-specific computing. In a different embodiment, creates a plurality of artificial-intelligence-specific tasks based on the raw data or just one artificial-intelligence-specific model. the central processor then designates each of the tasks to one of the processing units and then sends the tasks to corresponding processing units through the switch, for artificial-intelligence-specific computing.

In yet another embodiment, the system includes a second computing device having a plurality of second processing units and a second switch. The first and second processing units are substantially identical. The second switch receives and distributes the artificial-intelligence-specific tasks amongst the second processing unit. The central processor selectively designates one or more of the first processing units and the second processing units to perform artificial-intelligence-specific computing depending on the number of artificial-intelligence-specific tasks created based on the raw data or artificial-intelligence-specific model in the storage.

### BRIEF DESCRIPTION OF THE DRAWINGS

Non-limiting and non-exhaustive embodiments of the present disclosure are described with reference to the following figures, wherein like reference numerals refer to like parts throughout the various figures unless otherwise specified.
Fig. 1 is a block diagram of the machine learning computing device according to one embodiment of the present invention.
Fig. 2A-B are layout diagrams of the machine learning computing device showing the traces that electrically connects components coupled to the printed circuit board (PCB).
Fig. 2C is a top view of the machine learning computing device.
Fig. 3 is a block diagram of the machine learning system according to one embodiment of the present invention.
Fig. 4 is a block diagram of the block diagram of the machine learning system according to another embodiment of the present invention.
Fig. 5 is flow chart of a method to perform artificial-intelligence-specific tasks according to one embodiment of the present invention.
Fig. 6 is a flow chart of the method to perform artificial-intelligence-specific tasks according to another embodiment of the present invention.

### DETAILED DESCRIPTION

The embodiments can now be better understood by turning to the following detailed description of the embodiments, which are presented as illustrated examples of the embodiment defined in the claims. It is expressly understood that the embodiments as defined by the claims may be broader than the illustrated embodiments described below. Many alterations and modifications may be made by those having ordinary skill in the art without departing from the spirit and scope of the embodiments.

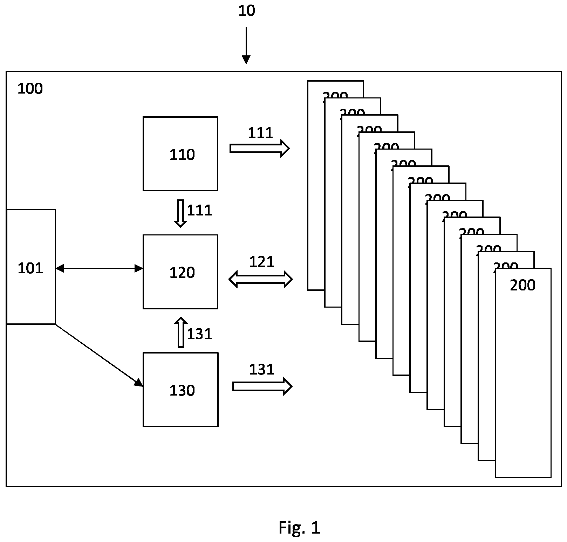

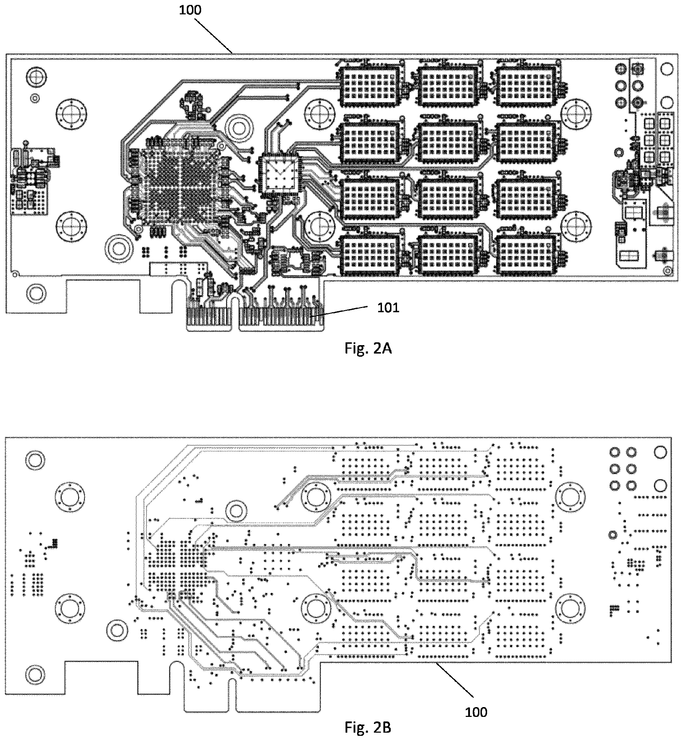

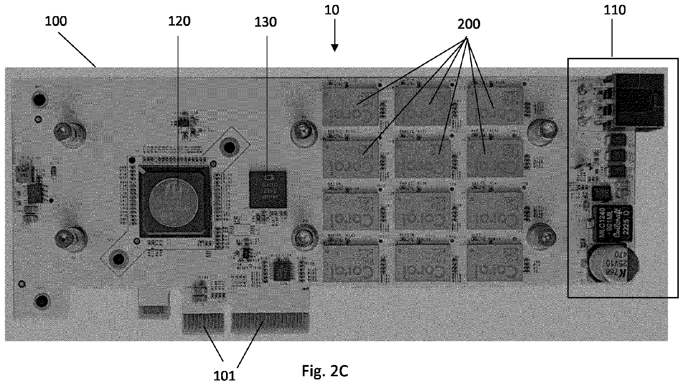

Fig. 1 is a block diagram of the machine learning computing device 10 according to one embodiment of the present invention. Fig. 2A-B are layout diagrams of the machine learning computing device 10 and show the traces that electrically connects components coupled to the printed circuit board (PCB). Fig. 2C is a top view of the machine learning computing device 10. The computing device includes a base 100, a power supply unit 110, a switch 120, a synchronization unit 130, a plurality of processing units 200. The base 100 is a multi-layered PCB that includes a plurality of traces for conducting electrical signals. The traces are highly conductive tracks that is used to connect the various components on a printed circuit board including the IC, capacitors, and resistors. In the present embodiment, the base 100 is an 8-layer PCB having preferably four signal layers and four planes that are firmly stacked. The layers include a ground plane, a power plane, and signal layers, wherein the power and ground planes separate the signal layers to minimize crosstalk between signal layers and provide inter-plane capacitance.

The base 100 can be a 2-layer PCB that is copper coated on both sides with an insulating layer in the middle. It has components on both sides of the board, which is why it is also called a double-sided PCB. They are fabricated by joining two layers of copper together, with a dielectric material in between. The copper on each side can transmit different electrical signals, which makes them suitable for applications where high-speed and compact packaging is essential. The electrical signals are routed between the two layers of copper, and the dielectric material between them helps to keep these signals from impeding on each other. 2 layer PCBs are the most common and also the most economical boards to manufacture. In different embodiments, the base can be a 4 layer PCB, 6 layer PCB, and 8 layer PCB, etc.

In the present embodiment, the power supply unit 110 is a DC (Director Current) to DC converter that converts a source of direct current from one voltage level to another. The power supply 110 is connected to an external power source to preferably receive power input at 12V and generate output voltages at 1.0V, 2.5V, and 3.3V. As illustrated, the power supply unit 110 is connected to the switch 120 to supply power 111 at the above-mentioned voltages. The power supply unit 110 is also connected to the processing units 200 to supply power 111 at preferably 3.3V. In different embodiments, the power supply unit 110 can be connected to connector 101 which is connected to a slot on the motherboard to receive power. In the present embodiment, the connector 101 is preferably a Peripheral Component Interconnect Express (PCIe) connector and the slot is a corresponding PCIe slot which is a standardized interface for motherboard components including graphics, memory, and storage.

The processing units 200 are AI accelerators for executing applications such as algorithms for robotics, Internet of Things, and other data-intensive or sensor-driven tasks. The processing units 200 are often many core designs and generally focus on low-precision arithmetic, novel dataflow architectures or in-memory computing capability. In the present embodiment, the processing units 200 are Edge Tensor Processing Units (TPU) developed by Google using Google's TensorFlow software. In different embodiments, the processing units 200 can be Cloud TPU or other specialized hardware accelerator or computer system designed to accelerate artificial intelligence and machine learning applications. In the present embodiment, the machine learning computing device 10 includes 12 processing units 200. However, in different embodiments, the machine learning computing device 10 can include other numbers of processing units 200 depending on factors such as the power supply rating, power requirements for the processing units 200, the form factor of the processing units 200, etc.

The switch 120 of the present embodiment is a Peripheral Component Interconnect Express (PCIe) switch that expand the number of PCIe lanes than what is available from a host device so that more devices can be supported by the host. For example, a PCIe switch can double the PCIe lanes of a x16 CPU to support more GPUs than what the CPU alone can handle. Some switches can even expand the lanes to hundreds of ports. This will allow more devices to be connected, overcoming the CPUs limited number of PCIe lanes. The switch 120 has one upstream port that connects to the host (such as a motherboard) through the connector 101, several downstream ports that connect to the processing units 200 (such as TPUs), and a switching logic that routes the data packets 121 between the ports. Each downstream port is assigned a set of PCIe lanes and each port is connected to a processing unit 200 so the bandwidth is not shared among the processing units; instead, data packets will only pass through the lanes of the processing unit 200 that requested it. The switch 120 preferably don't require any special software or driver to work. The switch 120 can also be configured via a management software that manufacturers develop for easier deployment, configuration, and monitoring of the processing units 200. There is also no need to install drivers for the processing units 200 connected to the switch 120 unless otherwise required by the operating system. Other functions of the switch 120 include interrupt handling, configuration access, power management and error reporting all of which can be monitored from the management software. The switch's performance depends on the PCIe version it is built with. Newer PCIe versions mean half the number of lanes than the previous version for the same bandwidth but at a faster transmission rate. Also, the switch 120 is connected to the connector 101 to receive data such as artificial-intelligence-tasks from a central processing unit and then distribute those tasks to the downstream processing units 200 for artificial-intelligence-specific processing. In conclusion, the switch 120 basically functions as an I/O controller and magnifies the host devices' capabilities to support more processing units 200. The switch 120 is the go-to components of system designers for interconnecting multiple systems, numerous devices, and other peripherals.

In the present embodiment, the synchronization unit 130 is a fanout buffers that creates multiple copies of input signals at its output and distribute them among several loads while achieving fast rise/fall time and low jitter. The synchronization unit 130 receives clock and reset signals 131 from an external synchronization circuit through the connector 101. The synchronization unit 130 then distributes the clock and reset signals 131 to the switch 120 and processing units 200 to ensure that the two components are properly synchronized. A clock signal 131 is an electronic logic signal (voltage or current) which oscillates between a high and a low state at a constant frequency and is used like a metronome to synchronize actions of digital circuits. In a synchronous logic circuit, the most common type of digital circuit, the clock signal 131 is applied to all storage devices, flip-flops and latches, and causes them all to change state simultaneously, preventing race conditions. A clock signal 131 is produced by an electronic oscillator called a clock generator. The most common clock signal 131 is in the form of a square wave with a 50% duty cycle. Circuits using the clock signal 131 for synchronization may become active at either the rising edge, falling edge, or, in the case of double data rate, both in the rising and in the falling edges of the clock cycle. On the other hand, the reset signal 131 causes the receiving component to initialize and start from a known state.

Both the processing units 200 and the switch 120 are coupled with the traces on the base so that the processing units 200 are connected to the downstream ports of the switch 120. On the other hand, the upstream of the switch 120 is connected to a host through the connector 101 to receive artificial-intelligence-specific data for the processing units 200 to perform artificial-intelligence-specific tasks.

Further, in the present embodiment, the synchronization unit 130, power supply unit 110, processing units 200, and switch 120 are mounted directly onto the surface of the base 100. As discussed above, the traces are disposed on different layers of the base 100, wherein each end of the traces stop at a flat, commonly silver, tin-lead, or gold plated cooper pads devoid of holes, called solder pads. The synchronization unit 130, the processing units 200, and switch 120 are then placed on the designated location to then be soldered with the solder pads. After soldering, the processing units 200 and switch 120 can communicate amongst themselves or with external devices via the traces and the connector 101 which is also connected to the traces on the base 100. In one embodiment, one or more processing units 200 or chips are surface mounted on the switch 120 directly. Here, the trace length of the one or more processing units 200 or chips is critical to the surface mounting of the processing units 200 on the switch 120. The mounting here optimizes the placement of the processing units using the trace length of the units on the switch to minimize the time it takes for the signal to travel.

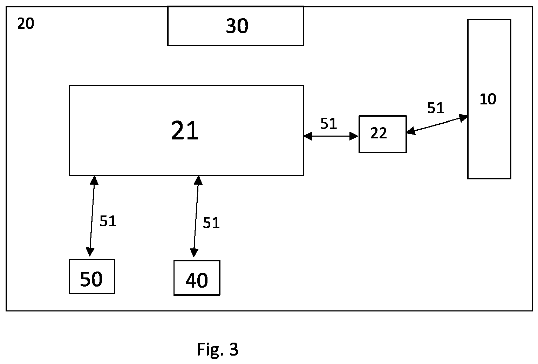

Fig. 3 is a block diagram of the machine learning system according to one embodiment of the present invention. The machine learning system includes a base board 20, a power source 30, a central processor 40, storage 50, and a first computing device 10. In the present embodiment, the first computer device 10 is substantially identical to the machine learning computing device 10 described above and thus its structure and components will not be repeated here. The base board 20 includes a chipset 21 electrically connected the central processor 40, storage 50, and first computing device 10. The base board 20 also includes a slot 22 configured to connect with the connector 101 of the first computing device 10. The slot 22 is preferably a PCIe slot which is a standardized interface for motherboard components including graphics, memory, and storage

The storage 50 includes a plurality machine learning models such as random forests, support vector machines, and neural networks etc., to be processed by the processing units 200. The storage 50 also includes a plurality of raw data 51 and the central processor 40 performs dataset preprocessing by transforming the raw data into dataset in a form that is suitable for artificial-intelligence-specific processing. Based on the programs in the storage 50, the central processor 40 can designate and load one machine learning model or dataset to each of the processing units 200.

Alternatively, depending on the data points of the model, the central processor 40 can employ pipelining technique by partitioning the dataset into several smaller sub-models and then load one of the smaller sub-models to each processing units 200. Pipelining improves the machine learning process by allowing the central processor 40 to better manage the libraries, runtimes, and hardware profiles of the processing units 200 by tailoring the processing of each sub-models to one specific processing unit 200. In another embodiment, the central processor 40 can assign the same model to multiple processing units 200 for parallel machine learning. This can improve throughput for high-speed applications and can reduce total latency for large models that otherwise cannot fit into the cache of a single processing unit 200. This also allows for faster iteration and reduces the time required to test different models, features, and parameters, leading to faster iterations and improved results. In yet another embodiment, at any given time, the central processor 40 can employ the combination of the task distribution methodology described above. In other words, at any given time, the processing units 200 can perform machine learning on artificial-intelligence-specific sub-tasks based on just one model or one artificial-intelligence-specific task corresponding to just one model. The processing units 200 can respectively process different tasks each corresponds to different models or identical task based on the same model.

The power source 30 of the present embodiment is a motherboard power supply connected to the base board 20 and configured to supply power 31 to the devices coupled with the base board 20. The power source 30 can be directly connected to the power supply unit 110 of the first computing device 10 to supply the 12V necessary for the power supply unit to power the rest of the components. Alternatively, the power supply unit 110 can obtain power from the slot 22 connected to the first computing device 10.

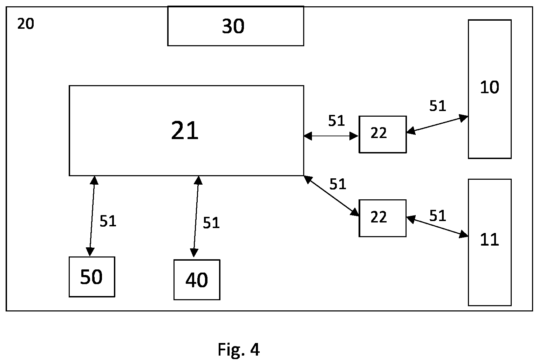

Fig. 4 is a block diagram of the block diagram of the machine learning system according to another embodiment of the present invention. The machine learning system includes a base board, a power source, a central processor, memory, storage, a first computing device, and a second computing device. In the present embodiment, the first and second computing devices are preferably identical to the machine learning computing device described above and thus its structure and components will not be repeated here. The first computing device includes 12 first processing units and the second computing device includes 12 second processing units. In the present embodiment, the first and second processing units are substantially identical. However, in different embodiment, the processing units can have different dimensions connector types, maximum achievable throughput, inference efficiency, etc. In the present embodiment, the switches of the first and second computing devices are preferably "transparent," meaning that the program and devices such as the central processor are not aware of the switches' presence in the hierarchy. In practice, the central processor designates the dataset to one specific processing unit in either the first or second computing device, based on dataset and the processing capacity of the processing unit. Said dataset is then sent to the processing unit through the PCIe slot connected to the computing device and then the switch connected to the processing unit. The switches are generally not considered a factor when deciding which processing unit is tasked to process one specific dataset.

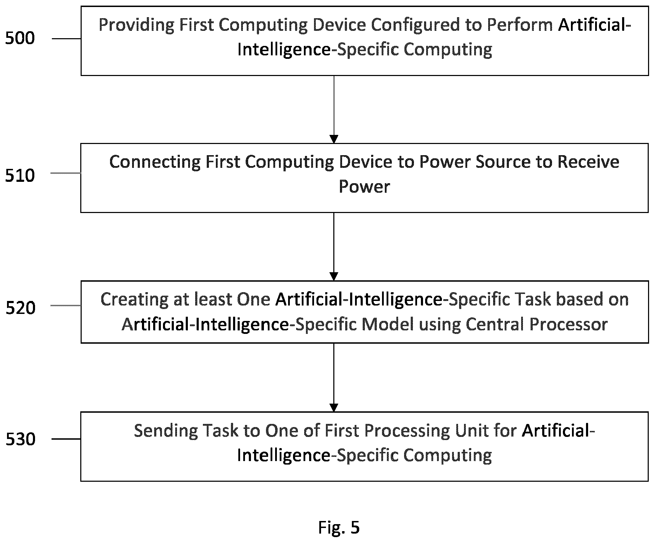

Fig. 5 is flow chart of a method to perform artificial-intelligence-specific tasks according to one embodiment of the present invention. Step 500 include providing a first computing device configured to perform artificial-intelligence-specific computing. The first computing device is substantially identical to the machine learning computing device described above and illustrated in Figs. 1-2. The computer device includes 12 processing units that are preferably Edge TPUs developed by Google^{®} but can be other Cloud TPU or other specialized hardware accelerator or computer system designed to accelerate artificial intelligence and machine learning applications.

Step 510 includes connecting the first computing device to a power source to receive power. In one embodiment, the power supply unit of the first computing device is directly connected to an external power supply to receive power. However, the power supply unit preferably receives power through a slot of a base board that is coupled with the first computing device, wherein the slot is preferably a standardized interface for motherboard components including graphics, memory, and storage, such as PCIE slots.

Step 520 includes creating at least one artificial-intelligence-specific task based on the artificial-intelligence-specific model using a central processor or a matrix processor. The above-mentioned base board includes the central processor and a storage having a plurality of raw data collected for machine learning purposes. The storage includes a plurality of raw data and the central processor perform dataset preprocessing by transforming the raw data into dataset in a form that is suitable for artificial-intelligence-specific processing by the processing units.

Based on the programs in the storage, the central processor can load one machine learning model or dataset to each of the processing units to be processed.

Alternatively, depending on the data points of the model, the central processor can employ pipelining technique by partitioning the dataset into several smaller sub-models and then load one of the smaller sub-models to each processing units. Pipeline improves the machine learning process by allowing the central processor to better manage the libraries, runtimes, and hardware profiles of the processing units by tailoring the processing of each sub-models to one specific processing unit. In another embodiment, the central processor can assign the same model to multiple processing units for parallel machine learning. This can improve throughput for high-speed applications and can reduce total latency for large models that otherwise cannot fit into the cache of a single Edge TPU. This also allows for faster iteration and reduces the time required to test different models, features, and parameters, leading to faster iterations and improved results. In yet another embodiment, at any given time, the central processor can employ the combination of the task distribution methodology described above. In other words, at any given time, the processing units can perform machine learning on artificial-intelligence-specific sub-tasks based on one model or just one artificial-intelligence-specific task corresponding to one model. The processing units can respectively process different tasks each corresponds to different models or identical task based on the same model.

Step 530 includes sending the task to one of the first processing unit for artificial-intelligence-specific computing. In the present embodiment, each of the machine learning model or sub-model based on one dataset is designated to one of the processing units. The model or sub-model is then transferred to the switch via the PCIe slot. The switch then transfer the model/sub-model to the designated processing unit to perform artificial-intelligence-specific computing. The processing unit then generates a computing result and transfer that to the external storage through the switch and the PCIe slot.

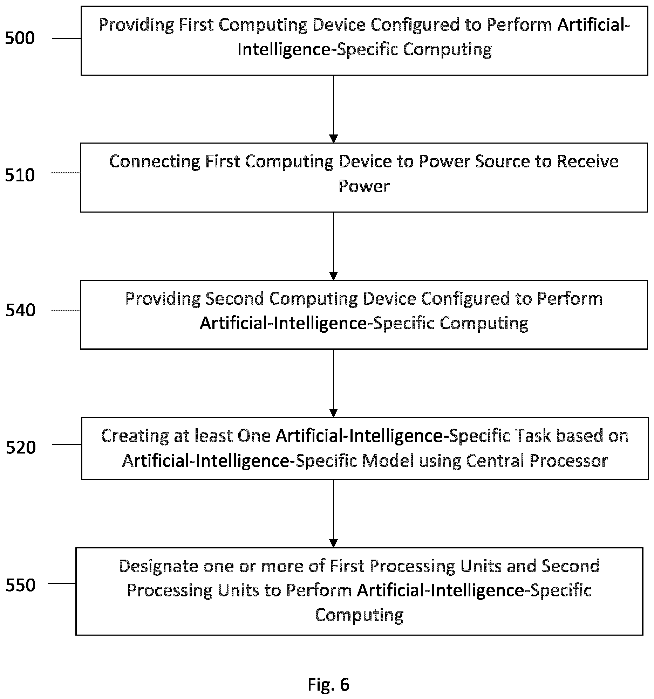

Fig. 6 is a flow chart of the method to perform artificial-intelligence-specific tasks according to another embodiment of the present invention. The method further includes step 540 of providing a second computing device configured to perform artificial-intelligence-specific computing. In the present embodiment, the first and second computing devices are preferably identical to the machine learning computing device described above and thus its structure and components will not be repeated here. The first computing device includes 12 first processing units and the second computing device includes 12 second processing units. In the present embodiment, the first and second processing units are substantially identical. However, in different embodiment, the processing units can have different dimensions connector types, maximum achievable throughput, inference efficiency, etc. Step 540 also includes connecting the second computing device to power source to receive power, similar to step 510 described above.

Step 550 includes selectively designate one or more of the first processing units and the second processing units to perform artificial-intelligence-specific computing. In the present embodiment, the switches of the first and second computing devices are preferably "transparent," meaning that the program and devices such as the central processor are not aware of the switches' presence in the hierarchy. In practice, the central processor designates the dataset to one specific processing unit in either the first or second computing device, based on the dataset and processing capacity of the processing unit. Said dataset is then sent to the corresponding processing unit through the PCIe slot connected to the computing device and then the switch connected to the processing unit. The switches are generally not considered a factor when deciding which processing unit is tasked to process one specific dataset.

Reference throughout this specification to "one embodiment," "an embodiment," "one example," or "an example" means that a particular feature, structure, or characteristic described in connection with the embodiment or example is included in at least one embodiment of the present disclosure. Thus, appearances of the phrases "in one embodiment," "in an embodiment," "one example," or "an example" in various places throughout this specification are not necessarily all referring to the same embodiment or example. Furthermore, the particular features, structures, databases, or characteristics may be combined in any suitable combinations and/or sub-combinations in one or more embodiments or examples. In addition, it should be appreciated that the figures provided herewith are for explanation purposes to persons ordinarily skilled in the art and that the drawings are not necessarily drawn to scale.

Many modifications and other embodiments of the invention will come to the mind of one skilled in the art having the benefit of the teachings presented in the foregoing descriptions and the associated drawings. Therefore, it is understood that the invention is not to be limited to the specific embodiments disclosed, and that modifications and embodiments are intended to be included within the scope of the appended claims. It is also understood that other embodiments of this invention may be practiced in the absence of an element/step not specifically disclosed herein.

## Claims

1. A computing device, comprising:
a base including a plurality of traces;
a plurality of processing units coupled with the traces on the base, wherein the processing unit are configured to perform one or more artificial-intelligence-specific tasks; and
a switch coupled with the traces on the base and connected to the processing units via the traces, wherein the processing unit generates an output based on the associated one or more artificial-intelligence-specific tasks and send the output to the switch, the switch is connected to an external power source to receive power for driving the processing units.

2. The computing device of claim 1, wherein the switch has a plurality of artificial-intelligence-specific tasks associated with different artificial-intelligence-specific models, and wherein the switch distributes the tasks to the processing units respectively; or
wherein the switch has a plurality of artificial-intelligence-specific computing tasks that are collectively generated based on an artificial-intelligence-specific model, each task is assigned to one of the processing units and the switch send the tasks to the corresponding processing units respectively for artificial-intelligence-specific computing.

3. The computing device of claim 1 or claim 2, wherein the processing units are surface mounted on the base and distributed over a surface of the base, the processing units are placed on the surface of the base to connect with the traces and the switch, and wherein a length between traces is optimized; and/or
further comprising a synchronization unit connected to the switch and the processing units, wherein the synchronization unit is configured to receive a synchronization signal and distribute copies of the synchronization signal to the switch and the processing units.

4. A machine learning system comprising:
a power source;
a central processor connected to the power source to receive power and configured to receive a plurality of artificial-intelligence-specific models, wherein the central processor creates at least one artificial-intelligence-specific task based on the artificial-intelligence-specific model; and
a first computing device connected to the power source to receive power and the central processor to receive artificial-intelligence-specific tasks, the first computing device including:
a first base including a plurality of first traces;
a plurality of first processing units coupled with the first traces on the first base and configured to perform artificial-intelligence-specific tasks; and
a first switch coupled with the first traces and connected to the first processing units via the first traces, the first switch receiving and distributing the artificial-intelligence-specific tasks amongst the first processing unit.

5. The machine learning system of claim 4, further comprising:
a memory having at least one artificial-intelligence-specific model; and
the central processor creating the artificial-intelligence-specific task based on one of the artificial-intelligence-specific model, the central processor then designating the artificial-intelligence-specific task to one of the processing units and sending the created task to the designated processing units through the switch for artificial-intelligence-specific computing.

6. The machine learning system of claim 4 or claim 5, further comprising:
a memory having at least one artificial-intelligence-specific model; and
the central processor creating a plurality of the artificial-intelligence-specific tasks based on the artificial-intelligence-specific model, the central processor then designates each of the tasks to one of the processing units and sends the tasks to corresponding processing units through the switch for artificial-intelligence-specific computing.

7. The machine learning system of one of claims 4 to 6, further comprising a second computing device connected to the power source to receive power and the central processor to receive artificial-intelligence-specific tasks, the second computing device including:
a second base including a plurality of second traces disposed on the second base;
a plurality of second processing units coupled with the second traces on the base and configured to perform artificial-intelligence-specific tasks;
a second switch coupled with the second traces and connected to the second processing units via the second traces, the second switch receiving and distributing the artificial-intelligence-specific tasks amongst the second processing unit; and
wherein the central processor selectively designates one or more of the first processing units and the second processing units to perform artificial-intelligence-specific computing depending on a number of the artificial-intelligence-specific tasks created based on the artificial-intelligence-specific model.

8. The computing devices of one of one of claims 1 to 3or the machine learning system of one of claims 4 to 7, wherein the processing units are matrix processors.

9. The machine learning system of one of claims 4 to 8, wherein the traces are distributed over a surface of the base, the processing units are placed on the surface of the base to connect with the traces and the switch; and/or
further comprising a synchronization signal generator configured to generate the synchronization signal, wherein the first computing device includes a synchronization unit connected to the switch and the processing units, wherein the synchronization unit is configured to receive a synchronization signal and distribute copies of the synchronization signal to the switch and the processing units.

10. A method to performing artificial-intelligence-specific tasks, comprising:
providing a first computing device configured to perform artificial-intelligence-specific computing, wherein the first computing device includes:
a first base including a plurality of first traces disposed on the first base;
a plurality of first processing units coupled with the first traces on the first base and configured to perform artificial-intelligence-specific tasks; and
a first switch coupled with the first traces and connected to the first processing units via the first traces, the first switch receiving and distributing the artificial-intelligence-specific tasks amongst the first processing unit;
connecting the first computing device to an external power source to receive power;
creating at least one artificial-intelligence-specific task based on the artificial-intelligence-specific model using a central processing unit; and
sending the task to one of the first processing unit for artificial-intelligence-specific computing.

11. The method of claim 10, wherein the step of providing the first computing device includes:
configuring the first processing units to perform artificial-intelligence-specific tasks;
coupling the first processing units with traces on the first base; and
coupling the first switch with the first trace on the first base to connect with the first processing units via the first trace, wherein the first processing unit generates an output based on the associated artificial-intelligence-specific tasks and send the output to the first switch.

12. The method of claim 10 or claim 11, further comprising:
storing at least two artificial-intelligence-specific models in a memory;
creating at least two artificial-intelligence-specific tasks based on different artificial-intelligence-specific models;
designating the tasks to the different first processing units respectively; and
sending the tasks to the corresponding first processing units through the first switch for artificial-intelligence-specific computing.

13. The method of one of claims 10 to 12, further comprising:
storing an artificial-intelligence-specific model in a memory;
creating a plurality of artificial-intelligence-specific computing tasks based on the model;
designating each of the tasks to one of the first processing units; and
sending the tasks to the corresponding first processing units through the first switch for artificial-intelligence-specific computing.

14. The method of one of claims 10 to 13, further comprising:
providing a second computing device configured to perform artificial-intelligence-specific computing, wherein the second computing device includes:
a second base including a plurality of second traces disposed on the second base;
a plurality of second processing units coupled with the second traces on the base and configured to perform artificial-intelligence-specific tasks; and
a second switch coupled with the second traces and connected to the second processing units via the second traces, the second switch receiving and distributing the artificial-intelligence-specific tasks amongst the second processing unit; and
selectively designate one or more of the first processing units and the second processing units to perform artificial-intelligence-specific computing depending on the number of artificial-intelligence-specific tasks created based on the artificial-intelligence-specific model.

15. The method of one of claims 10 to 14, further comprising:
configuring matrix processors to be the first processing units that perform artificial-intelligence-specific computing; and/or
further comprising:
distributing the first traces over a surface of the first base; and
placing the first processing units on the surface of the first base to connect with the first traces and the first switch.
